# FASCICULE DE BREVET EUROPEEN

(11) **EP 0 396 449 B1**
(45) Date de publication et mention de la délivrance du brevet: **02.11.1994**
(21) Numéro de dépôt: 90401106.1
(22) Date de dépôt: 25.04.1990
(51) Int. Cl.: C03C 8/18, C03C 17/06, C03C 17/42, C03C 17/38, B32B 17/10

(54) **Vitrage avec bande filtrante et procédé de fabrication**
Verglasung mit Filterband und Verfahren zur Herstellung
Glazing with filtering band and production process

(30) Priorité: 03.05.1989 FR 8905861
(43) Date de publication de la demande: 07.11.1990
(73) Titulaire: SAINT-GOBAIN VITRAGE INTERNATIONAL, 92400 Courbevoie (FR); VEGLA Vereinigte Glaswerke GmbH, D-52066 Aachen (DE)
(72) Inventeur: Schaefer, Wolfgang, Dr., D-5100 Aachen (DE)
(74) Mandataire: Muller, René

(56) Documents cités:
- EP-A- 0 132 198
- DE-A- 1 951 616
- GB-A- 925 171
- US-A- 4 710 426
- US-A- 4 744 844

## Description

La présente invention concerne un vitrage monolithique ou feuilleté pour véhicules automobiles, présentant au moins une zone filtrante atténuant le rayonnement lumineux et le rayonnement thermique.

Des vitrages et notamment des pare-brise ayant au moins une zone filtrante par exemple une bande filtrante notamment dans leur partie supérieure sont connus dans diverses réalisations.

Il s'agit généralement de pare-brise feuilletés constitués de deux feuilles de verre et d'une feuille intercalaire thermoplastique en polyvinylbutyral, teintée dans sa partie supérieure au moyen de colorants organiques. Un des inconvénients de ce pare-brise est que les colorants organiques présentent une résistance à la lumière réduite, de sorte que les régions teintées transparentes de la feuille de polyvinylbutyral se décolorent à la longue sous l'effet de la lumière.

Dans le cas d'un autre type de pare-brise connu, comme décrit par exemple dans la publication DE-OS 1 596 919 , la feuille de verre constituant le vitrage est pourvu d'une couche filtrante à base d'un oxyde métallique, la fabrication de cette couche filtrante s'effectuant par application sur le vitrage d'une solution de composés métalliques inorganiques qui sont oxydés en oxydes métalliques colorants à des températures plus élevées. La solution contenant les composés métalliques est pulvérisée sur la surface du verre et la pyrolyse a lieu au cours d'un traitement thermique suivant. Le procédé de pulvérisation ne permet que difficilement d'appliquer une couche mince et uniforme de manière reproductible, de sorte que ce procédé ne convient pas dans une fabrication industrielle.

D'autres pare-brise connus, par exemple du document DE-OS 1 951 616, utilisent une bande filtrante faite d'un émail à cuire inorganique qui est imprimé par sérigraphie sur la surface du verre et qui est cuit ensuite. L'émail à cuire est constitué dans ce cas d'un verre à bas point de fusion et de pigments colorés en oxydes métalliques dispersés dans le verre. L'émail à cuire peut présenter une transparence de 0 à 40 %. L'émail à cuire est imprimé selon une trame telle que la transmission de la lumière augmente progressivement depuis le bord jusqu'à la zone de vision. De telles bandes filtrantes à base d'émaux à cuire du type glaçure présentent aussi divers inconvénients. Les émaux à cuire du type glaçure ont, par exemple, toujours une certaine turbidité propre et forment une surface rugueuse, de sorte qu'ils ne permettent pas d'obtenir des couches transparentes claires. De plus, il est connu que la solidité du verre est diminuée par des couches du type glaçure, ce qui s'avère gênant étant donné que les bandes filtrantes couvrent une surface relativement étendue du vitrage.

L'invention a pour but de procurer un vitrage avec au moins une zone filtrante, pouvant être fabriquée industriellement et de façon reproductible.

Le vitrage conforme à l'invention est formé d'au moins une feuille de verre munie d'au moins une zone filtrante, en particulier dans sa partie supérieure sous la forme d'une bande filtrante, formée d'un revêtement transparent en une composition à cuire, désignée encore par la suite par "émail" à cuire, contenant au moins un métal noble présent en dispersion colloïdale, ledit revêtement étant appliqué par sérigraphie, ayant une épaisseur constante et présentant sur la totalité de sa surface, un tramage géométriquement rigoureux, le taux de couverture de la trame dans la région proche du bord étang de 85 à 95 %.

Il s'avère selon l'invention que le revêtement formant la zone filtrante contenant un métal noble présent en dispersion colloïdale, c'est-à-dire le revêtement en un émail dit de lustre, présente les propriétés de filtrage nécessaires.

De plus, le type d'application du revêtement formant la zone filtrante et la structure géométrique de ce revêtement sont particulièrement importants. Il est en effet connu que l'aspect extérieur de lustres, à cause de la très faible épaisseur de leur couche située dans le domaine des interférences, dépend fortement de l'épaisseur de la couche. Lorsque l'épaisseur de la couche varie, comme c'est forcément le cas lorsque le revêtement est appliqué par pulvérisation ou immersion, au moins dans la région de la transition vers la zone de vision non recouverte ou faiblement recouverte, on aboutit inévitablement à des phénomènes d'interférences et aux phénomènes d'irisation connus. Ceci est évité conformément à l'invention au moyen du procédé de sérigraphie qui garantit l'obtention d'une épaisseur de couche constante. L'effet dégradé souhaité lorsqu'il s'agit d'une bande filtrante, c'est-à-dire la transparence croissante en direction de la zone de vision, n'est obtenu que par la diminution du taux de couverture par application d'un tramage géométrique rigoureux. L'aspect extérieur particulièrement bon de la zone et en particulier de la bande filtrante est dû au fait qu'il n'y a pas de grande surface imprimée continue, mais une structure géométrique tramée, dans laquelle le taux de couverture atteint, dans la région la plus dense, c'est-à-dire dans la région proche du bord, tout au plus environ 95 % et de préférence environ 90 %. Alors que dans cette région, on utilise dans le revêtement une trame de trous présentant une répartition uniforme serrée de petits trous, dans la région de la transition vers la zone de vision, les trous de la trame deviennent de plus en plus grands. Finalement, la trame se fond dans la zone de vision sous la forme d'une trame de points dans laquelle les points deviennent de plus en plus petits. En variante, on peut bien entendu également choisir une trame de points pure dans laquelle la grosseur des points va en augmentant progressivement de la zone centrale vers le bord du vitrage jusqu'à ce qu'au voisinage de ce bord, les points se touchent et se chevauchent partiellement. La forme géométrique des trous ou des points peut être très variée.

Lorsque le taux de couverture est élevé, des trames à trous dans lesquelles les trous présentent un diamètre de 0,2 mm à 0,5 mm se sont révélées satisfaisantes. Pour un taux de couverture de 85 %, les écarts entre les centres des trous sont de 0,46 mm pour un diamètre de trou de 0,2 mm et de 1,15 mm pour un diamètre de trou de 0,5 mm. Pour un taux de couverture de 95 %, les écarts réciproques entre les trous sont d'environ 0,8 mm pour un diamètre de trou de 0,2 mm, et d'environ 2 mm, pour un diamètre de trou de 0,5 mm.

Dans la région à haute densité de couverture, c'est-à-dire dans la région proche du bord, dans laquelle le taux de couverture atteint 85 à 95 %, on imprime de préférence une trame de trous dans laquelle les trous présentent un diamètre de 0,3 à 0,4 mm et des écarts réciproques de 0,7 à 1,6 mm. Dans la région à faible densité de couverture, c'est-à-dire dans la région de transition entre la bande filtrante et la zone de vision proprement dite du pare-brise, la trame imprimée est, de préférence, une trame de points dans laquelle les points présentent un diamètre de 0,3 à 0,4 mm et des écarts réciproques de 0,7 à 1,6 mm. Dans la région à densité optique décroissante, c'est-à-dire dans la région intermédiaire entre la région à haute densité optique et la région de transition, les grosseurs des points ou des trous des trames et leurs écarts réciproques varient dans la mesure propre à engendrer l'effet dégradé souhaité de la bande filtrante.

Les lustres connus, par exemple par la publication du brevet GB 925 171 qui conviennent particulièrement pour le procédé conforme à l'invention, contiennent dans leur composition apte à l'impression, en plus des métaux nobles présents en dispersion colloïdale, des sels métalliques qui, lors de la cuisson, forment des oxydes métalliques par pyrolyse. Ces oxydes métalliques contribuent essentiellement à la formation de couches et à l'amélioration de l'adhérence des particules de métaux nobles.

Suivant un développement avantageux de l'invention, le vitrage est pourvu de deux zones filtrantes, notamment deux bandes filtrantes, la région inférieure du vitrage et en particulier du pare-brise étant également pourvue d'une bande filtrante qui possède les mêmes propriétés que la bande filtrante supérieure et qui est imprimée en même temps que la bande filtrante supérieure. Au moyen de cette bande filtrante disposée dans la région inférieure du pare-brise, on peut obtenir, par exemple, une diminution sensible de l'effet d'éblouissement dû aux rayons solaires réfléchis par le capot-moteur et aux projecteurs de véhicules arrivant en sens inverse. En outre, cette bande filtrante inférieure contribue nettement à une amélioration de la climatisation de l'habitacle des véhicules.

Suivant un autre développement de l'invention, la zone filtrante recouvre essentiellement toute la surface du vitrage avec les effets dégradés souhaités.

Sous un des aspects de l'invention, le vitrage présente au moins deux couches, à savoir au moins une feuille de verre silicatée extérieure et au moins une couche en matière plastique, notamment une couche ayant des propriétés d'absorbeur d'énergie ou une couche ayant des propriétés de surface telles que résistance à la rayure et à l'abrasion, ou encore une couche ayant des propriétés d'absorbeur d'énergie recouverte d'une couche ayant des propriétés de surface. La couche de matière plastique peut aussi être une couche intercalaire entre deux feuilles de verre.

Le fait que le revêtement formant la bande filtrante soit recouvert par une couche de matière plastique constitue une caractéristique avantageuse de l'invention. Etant donné que les couches d'émail de lustre, qui constituent la bande filtrante, présentent une surface particulièrement sensible, on élimine de cette façon le risque que la couche formant la bande filtrante accuse au cours du temps des perturbations optiques gênantes par modification de sa surface. On constate de surcroît que le pouvoir d'adhérence de la couche de matière plastique à l'emplacement de la zone filtrante n'est pas sensiblement diminué.

Selon une réalisation du vitrage comportant une bande filtrante, celui-ci comporte en outre une bande marginale formant cadre en un émail à cuire opaque, disposée sur la feuille de verre extérieure, sur le côté adjacent à la couche de matière plastique, le long du bord de la feuille de verre. Dans cette réalisation, la bande filtrante et le cadre en émaii se chevauche au moins dans la région supérieure du vitrage.

Un vitrage, notamment un pare-brise présentant cette structure peut être fabriqué à l'aide des méthodes de fabrication usuelles. Il possède l'adhérence nécessaire des couches individuelles dans la région marginale et peut être monté sans difficulté par le procédé de collage dans les cadres de fenêtres de la carrosserie . Il s'est avéré que le revêtement formant la bande filtrante peut être appliqué sur le revêtement formant cadre en émail à cuire opaque qui sert à empêcher la vue sur le cordon d'adhésif situé derrière le pare-brise à l'état monté et, en outre, à protéger la matière adhésive contre l'action des rayons UV. Bien que dans le cas du revêtement formant cadre opaque comme dans celui du revêtement formant la bande filtrante, il s'agit chaque fois d'un émail à cuire, et que ces deux émaux à cuire présentent des compositions et des propriétés entièrement différentes, il s'est avéré que les deux couches peuvent être appliquées sans difficulté l'une sur l'autre et peuvent être cuites ensemble dans un processus de traitement thermique unique.

D'autres réalisations et développements avantageux de l'invention ressortiront des revendications dépendantes et de la description suivante de diverses formes d'exécution de l'invention, donnée avec référence aux dessins annexés, dans lesquels :
Les fig. 1, 1a, 1b et 2 illustrent un pare-brise conforme à l'invention, formé d'un vitrage feuilleté comprenant deux feuilles de verre silicaté et une couche de matière plastique intercalaire ;
La fig. 3 illustre un pare-brise conforme à l'invention, formé d'une seule feuille de verre silicaté et d'une couche de matière plastique qui y est unie, et
La fig. 4 illustre un autre pare-brise conforme à l'invention, formé d'un vitrage feuilleté et d'une couche antiéclat supplémentaire.

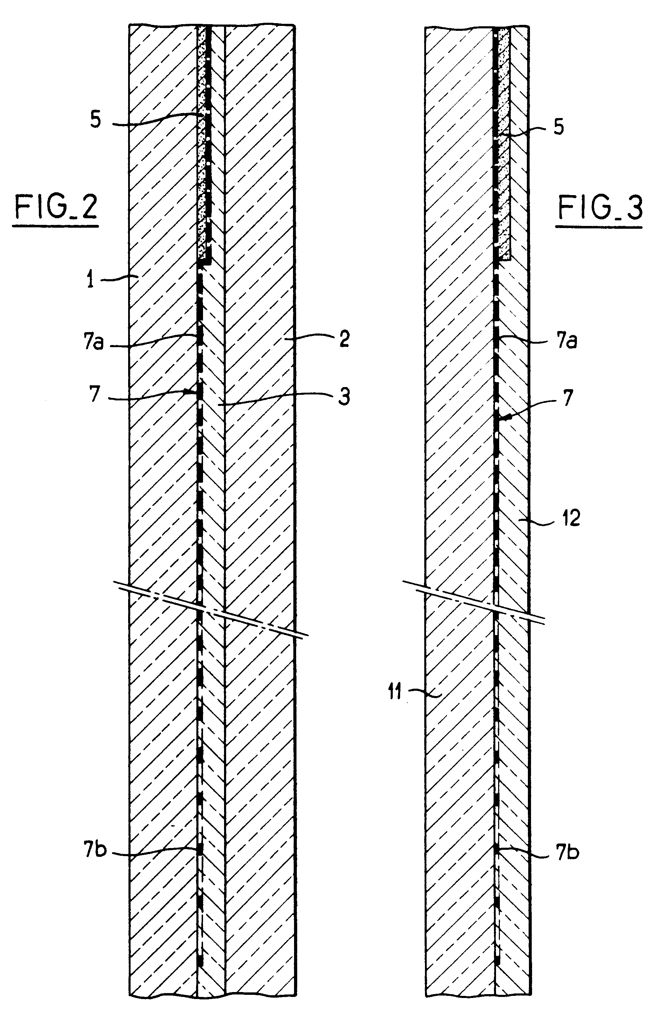

Les dessins des fig. 2, 3 et 4 montrent chaque fois une coupe verticale dans la région supérieure d'un pare-brise.

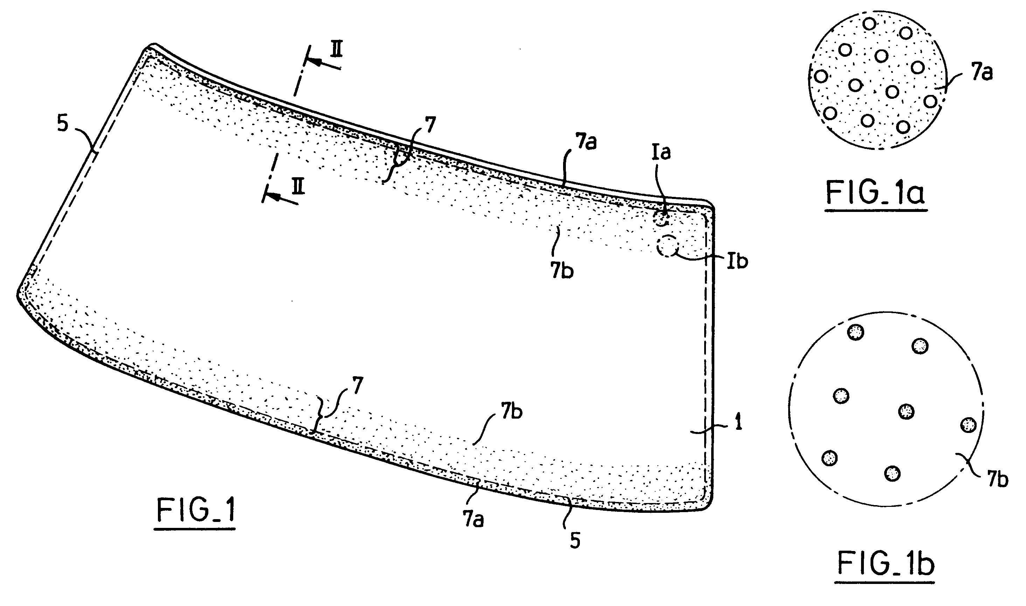

La forme d'exécution représentée sur les fig. 1 et 2 est un vitrage feuilleté dit classique comprenant une feuille de verre silicaté extérieure 1, une feuille de verre silicaté intérieure 2 qui, lorsque le pare-brise est en place sur le véhicule, est orientée vers l'habitacle et une couche intercalaire thermoplastique absorbant de l'énergie 3, par exemple en polyvinylbutyral.

Sur la surface de la feuille de verre extérieure 1 tournée vers la couche intercalaire 3 est disposée le long du bord du pare-brise, une bande marginale formant cadre 5 en un émail à cuire opaque. L'épaisseur de couche de cette bande marginale est d'environ 5 à 30 micromètres. Cet émail à cuire est en l'occurence un émail à bas point de fusion fait d'un verre de base dont le point de fusion est d'environ 580°C et d'oxydes de métaux lourds pigmentaires colorés incorporés dans le verre de base. Des émaux à cuire de ce type sont bien connus et disponibles dans le commerce. Ils sont imprimés sur la feuille de verre 1 par un procédé sérigraphique.

Le revêtement 7 formant la bande filtrante est disposé sur la même surface de la feuille de verre 1 que celle qui porte la bande marginale 5. Le revêtement 7 est situé dans la région marginale de la feuille de verre sur la couche d'émail formant la bande marginale 5. Il a une épaisseur de couche d'environ 100 à 300 nm et est constitué d'un émail à cuire dit lustre, c'est-à-dire d'une couche d'émail transparente dont l'effet de coloration est dû à la présence de métaux nobles en dispersion colloïdale. A titre de métal noble, on peut utiliser en particulier l'or, l'argent, le platine et le palladium, l'adhérence des métaux nobles étant améliorés par le fait que le revêtement contient des oxydes métalliques, comme par exemple de l'oxyde de bismuth. Le revêtement est formé avec les propriétés de coloration souhaitées lors de la cuisson par pyrolyse de sels métalliques d'acides résiniques, qui sont amenés à une viscosité adéquate pour le dépôt au moyen d'huiles essentielles telle que l'huile de lavande. Des compositions adéquates pour former le lustre sont décrites par exemple dans la publication de brevet GB 925 171. Le dépôt du revêtement formant la bande filtrante 7 est à nouveau effectué par sérigraphie.

Bien que le revêtement formant la bande filtrante 7 présente une transparence élevée, il ne s'agit pas ici d'un revêtement continu, c'est-à-dire ininterrompu, mais en tout cas d'un revêtement tramé de façon régulière, qui est interrompu selon un agencement régulier. Dans la région présentant la plus haute densité optique, c'est-à-dire dans la région 7a du revêtement qui est voisine de la bande marginale 5, le taux de couverture de la surface va de 85 jusqu'à 95 % et est, de préférence, d'environ 90 %. Ce taux de couverture est atteint au moyen d'une trame de trous adéquate. Pour atteindre un taux de couverture de 90 %, dans le cas d'un diamètre de trou de 0,3 mm, la distance de centre à centre entre deux trous est de 0,85 mm. Grâce à cette trame de trous, les inconvénients normalement observés dans le cas d'émaux du type lustre, à savoir une irisation du revêtement et l'influence perturbatrice de défauts d'homogénéité ponctuels, comme des particules de poussière, qui viennent en contact avec le revêtement avant la cuisson du lustre, sont de manière étonnante évités avec certitude et on obtient un aspect optique uniforme et net de la bande filtrante aussi bien en transparence qu'en réflexion.

Dans la région 7 b du revêtement formant la bande filtrante qui est voisine de la zone de vision du pare-brise, dans laquelle est formée une transition continue de la bande filtrante avec une transparence croissante, le taux de couverture diminue de façon continue et, dans la section d'extrémité 7 b, n'atteint plus qu'environ 5 %, par le fait que le lustre n'est plus imprimé ici que sous la forme de fins points. Dans la section d'extrémité de cette région, les points présentent, par exemple, un diamètre de 0,35 mm et des écarts réciproques de 3 mm.

Après l'impression de la bande marginale 5, on laisse durcir l'émail imprimé, en le soumettant, suivant sa composition, à un traitement faisant appel à un rayonnement IR ou à un rayonnement UV. Sur l'émail ainsi durci et la région superficielle du vitrage qui s'y raccorde, on applique alors de façon tramée la composition de lustre préparée pour la sérigraphie. Le lustre imprimé est ensuite soumis à un processus de séchage adéquat, puis les deux couches d'émail sont cuites ensemble à la température d'environ 600°C qui est nécessaire pour le bombage des vitrages. Finalement, les deux feuilles de verre 1 et 2 sont soumises de la manière habituelle aux traitements ultérieurs donnant le vitrage feuilleté.

Dans le cas du pare-brise représenté sur la fig. 3, il s'agit d'un pare-brise de sécurité qui comprend une seule feuille de verre silicaté 11 disposée du côté extérieur du véhicule et une feuille de matière plastique 12 disposée du côté intérieur du véhicule. La feuille de matière plastique 12 présente, d'une part, des propriétés d'absorption de l'énergie et d'autre part, une surface résistante aux rayures. Elie peut être formée d'une ou de deux couches en polyuréthanne. Dans ce dernier cas, la feuille de matière plastique comprend une couche à base d'un polyuréthanne présentant des propriétés d'absorbeur d'énergie et une couche de revêtement autocicatrisable à base d'un polyuréthanne thermodurcissable.

Des vitrages de sécurité ayant cette structure sont connus et sont décrits, par exemple, dans les publications de brevets européens 0 131 523 et 0 132 198.

Dans le cas représenté sur la Fig. 3, le revêtement 7 formant la bande filtrante, qui est fait d'un émail à cuire de type lustre, est disposé initialement sur la feuille de verre 11. La composition de l'émail à cuire du type lustre ainsi que l'agencement et la fabrication du revêtement 7 correspondent à l'exemple de réalisation décrit en relation avec la Fig. 1. Le revêtement 7 formant la bande filtrante présente à nouveau une région optiquement dense 7a et une région de transition 7b dans laquelle, par le choix d'une trame adéquate, le taux de couverture diminue. La bande marginale formant cadre 5 est dans ce cas imprimée sur le revêtement 7 qui, après l'opération d'impression, est tout d'abord soumis à un processus de séchage. La cuisson des deux couches 7 et 5 s'effectue également dans ce cas au cours d'une opération de cuisson commune. Dans une variante, on peut d'abord imprimer le cadre 5, puis le revêtement 7.

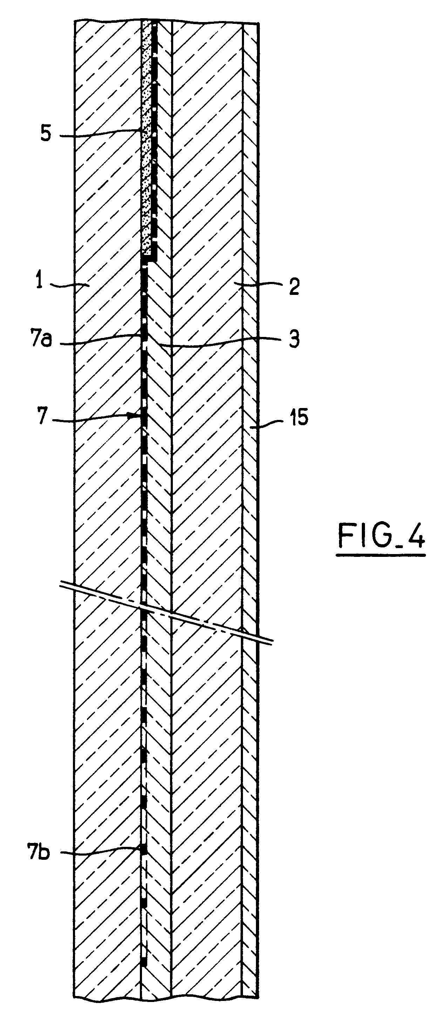

Une autre forme d'exécution d'un pare-brise conforme à l'invention est illustrée sur la Fig. 4. Dans ce cas, un vitrage feuilleté tel qu'il a été décrit en détail à propos de la Fig 1, est pourvu, en outre, d'une feuille ou couche antiéclat 15, par exemple en un polyuréthanne hautement élastique à réticulation tridimensionnelle possédant des propriétés d'autocicatrisation et d'antilacération. Des couches de polyuréthanne convenables sont décrites par exemple dans les publications de brevets français 2 398 606 et 2 574 396.

L'agencement et la configuration du revêtement 7 formant la bande filtrante et de la bande marginale 5 correspondent à la forme d'exécution décrite à propos de la Fig. 1.

## Revendications

1. Vitrage, en particulier pare-brise pour véhicules automobiles, présentant au moins une zone filtrante atténuant le rayonnement lumineux et le rayonnement thermique, caractérisé en ce que le vitrage comprend au moins une feuille de verre (1 ; 11) munie de la zone filtrante formée d'un revêtement transparent (7) en une composition à cuire contenant au moins un métal noble présent en dispersion colloïdale, le revêtement (7) formant la zone filtrante ayant une épaisseur de couche constante, et étant appliqué par sérigraphie et présentant, sur la totalité de sa surface, un tramage géométriquement rigoureux, le taux de couverture de la trame dans la région proche du bord du vitrage étant de 85 à 95 %.

2. Vitrage selon la revendication 1, caractérisé en ce que la zone filtrante est une bande filtrante disposée dans la partie supérieure du vitrage.

3. Vitrage selon la revendication 1 ou 2, caractérisé en ce que le revêtement transparent (7) formant la zone filtrante présente une épaisseur de 100 à 300 nanomètres.

4. Vitrage selon une des revendications 1 à 3, caractérisé en ce que le revêtement (7) contenant un ou plusieurs métaux nobles en dispersion colloïdale contient un ou plusieurs oxydes métalliques, en particulier de l'oxyde de bismuth, qui sont formés lors de la cuisson, par pyrolyse de sels métalliques adéquats.

5. Vitrage selon une des revendications 1 à 4, caractérisé en ce que le revêtement (7) formant la zone filtrante est constitué, dans la région (7a) à forte densité optique, par une trame de trous, dans laquelle les trous présentent un diamètre de 0,2 à 0,5 millimètre et des écarts réciproques de 0,5 à 2 millimètres.

6. Vitrage selon une des revendications 1 à 5, caractérisé en ce que le revêtement (7) formant la zone filtrante est constitué, dans la région de transition (7b) à densité optique plus faible, par une trame de points, dans laquelle les points présentent un diamètre de 0,2 à 0,5 millimètre et des écarts réciproques de 0,5 à 2 millimètres.

7. Vitrage selon une des revendications 1 à 6, caractérisé en ce que la région supérieure et la région inférieure sont pourvue d'un revêtement transparent formant deux bandes filtrantes fait du même émail à cuire transparent et appliqué au cours de la même opération d'impression.

8. Vitrage selon une des revendications 1 à 7, caractérisé en ce qu'il présente au moins une couche de matière plastique disposée du côté de la feuille de verre portant la zone filtrante.

9. Vitrage selon la revendication 8, caractérisé en ce que la couche de matière plastique est une couche ayant des propriétés d'absorbeur d'énergie, notamment en polyvinylbutyral ou en polyuréthane.

10. Vitrage selon une des revendications 8 à 9, caractérisé en ce qu'une bande marginale formant cadre (5) en un émail à cuire opaque est disposée sur la feuille de verre extérieure (1 ; 11), sur le côté adjacent à la couche de matière plastique (3 ; 12), le long du bord de la feuille de verre, la bande marginale (5) et le bord de la bande filtrante se chevauchant.

11. Vitrage selon la revendication 10, caractérisé en ce que la bande marginale formant cadre (5) en émail à cuire opaque présente une épaisseur de couche de 5 à 30 micromètres.

12. Vitrage selon une des revendications 8 à 11, caractérisé en ce qu'il est formé d'une feuille de verre 1 et d'une feuille en matière plastique présentant des propriétés d'absorbeur d'énergie et une surface résistante aux rayures, tournée vers l'habitacle pour les passagers.

13. Vitrage selon la revendication 12, caractérisé en ce que la feuille de matière plastique est formée d'une couche à base d'un polyuréthane ayant des propriétés d'absorbeur d'énergie et d'une couche de revêtement autocicatrisable à base d'un polyuréthane thermodurcissable.

14. Pare-brise selon une des revendications 8 à 11, caractérisé en ce qu'une feuille de verre silicaté (2) est disposée sur la couche absorbant de l'énergie (3) en matière plastique et une couche antiéclat (15) en matière plastique présentant une surface autocicatrisable est disposée sur la feuille de verre silicaté (2).

15. Procédé pour la fabrication d'un pare-brise selon la revendication 11, caractérisé en ce que l'émail à cuire constituant la bande marginale formant cadre (5) est imprimé en une épaisseur de couche de 5 à 30 micromètres par sérigraphie sur la feuille de verre (1 ; 11) et est séché, le revêtement (7) formant la zone filtrante est imprimé sur la bande marginale séchée (5) et sur la surface adjacente de la feuille de verre (1) en une épaisseur de couche de 100 à 300 nanomètres par sérigraphie et est séché, ou en opérant en ordre inverse en imprimant d'abord la bande filtrante, puis la bande marginale, et les deux couches imprimées et séchées sont cuites au cours d'un traitement thermique.

## Claims

1. Pane, especially windscreen for automobile vehicles, having at least one filtering zone attenuating luminous radiation and thermal radiation, characterized in that the pane comprises at least one glass sheet (1; 11) provided with the filtering zone formed of a transparent coating (7) of a baking composition containing at least one noble metal present in colloidal dispersion, the coating (7) forming the filtering zone having a constant film thickness and being applied by screen printing and having, over the entirety of its area, a rigorously geometrical screen density, the coverage rate of the screen in the region near the edge of the pane being from 85 to 95%.

2. Pane according to Claim 1, characterized in that the filtering zone is a filtering band disposed in the upper part of the pane.

3. Pane according to Claim 1 or 2, characterized in that the transparent coating (7) forming the filtering zone has a thickness of 100 to 300 nanometres.

4. Pane according to one of Claims 1 to 3, characterized in that the coating (7) containing one or more noble metals in colloidal dispersion contains one or more metallic oxides, in particular bismuth oxide, which are formed during the baking by pyrolysis of suitable metallic salts.

5. Pane according to one of Claims 1 to 4, characterized in that the coating (7) forming the filtering zone is constituted, in the region (7a) of high optical density, of a screen of holes, in which the holes have a diameter of 0.2 to 0.5 millimetre and mutual spacings of 0.5 to 2 millimetres.

6. Pane according to one of Claims 1 to 5, characterized in that the coating (7) forming the filtering zone is constituted, in the transition region (7b) of lower optical density, of a screen of dots, in which the dots have a diameter of 0.2 to 0.5 millimetre and mutual spacings of 0.5 to 2 millimetres.

7. Pane according to one of Claims 1 to 6, characterized in that the upper region and the lower region are provided with a transparent coating forming two filtering bands, made of the same transparent baking enamel and applied during the same printing operation.

8. Pane according to one of Claims 1 to 7, characterized in that it possesses at least one film of plastics material disposed on the side of the glass sheet carrying the filtering zone.

9. Pane according to Claim 8, characterized in that the film of plastics material is a film having energy-absorber properties, notably of polyvinyl butyral or of polyurethane.

10. Pane according to one of Claims 8 to 9, characterized in that a marginal band forming a frame (5) of an opaque baking enamel is disposed on the outer glass sheet (1; 11) on the side adjacent to the film of plastics material (3; 12), along the edge of the glass sheet, the marginal band (5) and the edge of the filtering band overlapping each other.

11. Pane according to Claim 10, characterized in that the marginal band forming a frame (5) of opaque baking enamel has a film thickness of 5 to 30 micrometres.

12. Pane according to one of Claims 8 to 11, characterized in that it is formed of a glass sheet (1) and of a sheet of plastics material having energy-absorber properties and a scratch-resistant surface, facing towards the passenger compartment.

13. Pane according to Claim 12, characterized in that the sheet of plastics material is formed of a film based upon a polyurethane having energy-absorber properties and of a self-healing coating film based upon a thermosetting polyurethane.

14. Windscreen according to one of Claims 8 to 11, characterized in that a sheet of silicate glass (2) is disposed on the energy-absorbent film (3) of plastics material and an antisplinter film (15) of plastics material having a self-healing surface is disposed on the sheet of silicate glass (2).

15. Method of making a windscreen according to Claim 11, characterized in that the baking enamel constituting the marginal band forming a frame (5) is printed at a film thickness of 5 to 30 micrometres by screen printing onto the glass sheet (1; 11) and is dried, the coating (7) forming the filtering zone is printed onto the dried marginal band (5) and onto the adjacent surface of the glass sheet (1) in a film thickness of 100 to 300 nanometres by screen printing and is dried, or by operating in the reverse order by first printing the filtering band, then the marginal band, and the two printed and dried films are baked during the course of a thermal treatment.

## Patentansprüche

1. Verglasung, insbesondere Windschutzscheibe für Kraftfahrzeuge, mit wenigstens einer die Licht- und die Wärmestrahlung dämpfenden Filterzone, **dadurch gekennzeichnet,** daß die Verglasung wenigstens eine mit der Filterzone versehene Glasscheibe (1;11) umfaßt, wobei die Filterzone von einem transparenten Belag (7) aus einer Einbrennfarbe gebildet wird, die wenigstens ein in kolloidaler Dispersion vorliegendes Edelmetall enthält, und daß der die Filterzone bildende Belag (7) eine konstante Schichtdicke aufweist, durch Siebdruck aufgebracht ist und auf seiner gesamten Oberfläche eine streng geometrische Rasterung aufweist, wobei die Flächendeckung des Rasters im randnahen Bereich der Glasscheibe 85 bis 95 % beträgt.

2. Verglasung nach Anspruch 1, dadurch gekennzeichnet, daß die Filterzone ein im oberen Teil der Verglasung angeordnetes Filterband ist.

3. Verglasung nach Anspruch 1 oder 2, dadurch gekennzeichnet, daß der die Filterzone bildende transparente Belag (7) eine Dicke von 100 bis 300 Nanometern aufweist.

4. Verglasung nach einem der Ansprüche 1 bis 3, dadurch gekennzeichnet, daß der ein oder mehrere Edelmetalle in kolloidaler Dispersion enthaltende Belag (7) ein oder mehrere Metalloxide, insbesondere Wismutoxid, enthält, die während des Einbrennens durch Pyrolyse aus geeigneten Metallsalzen entstehen.

5. Verglasung nach einem der Ansprüche 1 bis 4, dadurch gekennzeichnet, daß der die Filterzone bildende Belag (7) in dem Bereich (7a) mit starker optischer Dichte von einer Lochrasterung gebildet wird, wobei die Löcher einen Durchmesser von 0,2 bis 0,5 mm und einen gegenseitigen Abstand von 0,5 bis 2 mm aufweisen.

6. Verglasung nach einem der Ansprüche 1 bis 5, dadurch gekennzeichnet, daß der die Filterzone bildende Belag (7) im Übergangsbereich (7b) mit geringerer optischer Dichte aus einem Punktraster besteht, bei dem die Punkte einen Durchmesser von 0,2 bis 0,5 mm und einen gegenseitigen Abstand von 0,5 bis 2 mm aufweisen.

7. Verglasung nach einem der Ansprüche 1 bis 6, dadurch gekennzeichnet, daß der obere Bereich und der untere Bereich jeweils mit einem transparenten Belag versehen sind, der zwei Bandfilter aus der gleichen transparenten Einbrennfarbe bildet und im Zuge des gleichen Druckvorgangs aufgebracht ist.

8. Verglasung nach einem der Ansprüche 1 bis 7, dadurch gekennzeichnet, daß sie wenigstens eine Schicht aus einem Kunststoffmaterial aufweist, die auf der die Filterzone tragenden Seite der Glasscheibe angeordnet ist.

9. Verglasung nach Anspruch 8, dadurch gekennzeichnet, daß die Schicht aus Kunststoffmaterial eine Schicht mit energieabsorbierenden Eigenschaften ist, insbesondere aus Polyvinylbutyral oder aus Polyurethan.

10. Verglasung nach Anspruch 8 oder 9, dadurch gekennzeichnet, daß ein rahmenförmiger Randstreifen (5) aus einer opaken Einbrennfarbe auf der äußeren Glasscheibe (1;11) auf der an der Kunststoffschicht (3;12) anliegenden Seite entlang dem Scheibenrand angeordnet ist, und daß der Randstreifen (5) und der Rand des Filterbandes sich überdecken.

11. Verglasung nach Anspruch 10, dadurch gekennzeichnet, daß der rahmenförmige Randstreifen (5) aus opaker Einbrennfarbe eine Schichtdicke von 5 bis 30 Mikrometern aufweist.

12. Verglasung nach einem der Ansprüche 8 bis 11, dadurch gekennzeichnet, daß sie aus einer Glasscheibe (1) und einer Folie aus Kunststoff besteht, die energieabsorbierende Eigenschaften und eine gegen Verkratzung widerstandsfähige Oberfläche aufweist, und die auf der zum Fahrgastraum weisenden Seite der Verglasung angeordnet ist.

13. Verglasung nach Anspruch 12, dadurch gekennzeichnet, daß die Kunststoffolie aus einer Schicht auf Basis eines Polyurethans mit energieabsorbierenden Eigenschaften und einer selbstheilenden Überzugsschicht auf Basis eines wärmehärtenden Polyurethans besteht.

14. Windschutzscheibe nach einem der Ansprüche 8 bis 11, dadurch gekennzeichnet, daß eine Silikatglasscheibe (2) auf der energieabsorbierenden Schicht (3) aus Kunststoff, und eine Splitterschutzschicht (15) aus Kunststoff mit selbstheilender Oberfläche auf der Silikatglasscheibe (2) angeordnet ist.

15. Verfahren zur Herstellung einer Windschutzscheibe nach Anspruch 11, dadurch gekennzeichnet, daß die den rahmenförmigen Randstreifen (5) bildende Einbrennfarbe in einer Schichtdicke von 5 bis 30 Mikrometern durch Siebdruck auf die Glasscheibe (1;11) aufgedruckt und getrocknet wird, daß der die Filterzone bildende Belag (7) auf den getrockneten Randstreifen (5) und auf die benachbarte Oberfläche der Glasscheibe (1), oder in umgekehrter Reihenfolge zunächst das Filterband und dann der Randstreifen, in einer Schichtdicke von 100 bis 300 Nanometern durch Siebdruck aufgedruckt und getrocknet, und die beiden aufgedruckten und getrockneten Schichten im Zuge einer Wärmebehandlung eingebrannt werden.
